# EUROPÄISCHE PATENTSCHRIFT

(11) **EP 2 412 997 B1**
(45) Veröffentlichungstag und Bekanntmachung des Hinweises auf die Patenterteilung: **12.06.2013**
(21) Anmeldenummer: 11175515.3
(22) Anmeldetag: 27.07.2011
(51) Int. Cl.: F16D 65/14, F16J 3/04, F16J 15/52

(54) **Scheibenbremse**
Disc brake
Frein à disque

(30) Priorität: 28.07.2010 DE 102010032517
(43) Veröffentlichungstag der Anmeldung: 01.02.2012
(73) Patentinhaber: KNORR-BREMSE Systeme für Nutzfahrzeuge GmbH, 80809 München (DE)
(72) Erfinder: Beck, Thomas, 94034 Passau (DE)
(74) Vertreter: Mattusch, Gundula

(56) Entgegenhaltungen:
- EP-A1- 2 336 607
- EP-A2- 2 199 639
- WO-A1-2008/025489
- US-A1- 2001 047 913

## Beschreibung

Die Erfindung betrifft eine Scheibenbremse gemäß dem Oberbegriff des Anspruchs 1.

Zum Schutz in einem Aufnahmeraum des Bremssattels angeordneter funktionsrelevanter Bauteile, wie einer Zuspanneinrichtung, vor Korrosion durch Witterungseinflüsse, ist der Aufnahmeraum weitgehend verschlossen, und zwar auf der der bei einer Schiebesattelbremse zuspannseitigen Bremsbacke zugeordneten Seite mittels eines Verschlussdeckels.

Mittels der Zuspanneinrichtung gegen den Bremsbelag drückbare Stellspindeln sind durch den Verschlussdeckel geführt und hier jeweils durch einen Faltenbalg abgedichtet, der einerseits an der Stellspindel und andererseits am Verschlussdeckel befestigt ist. Hierzu weist der Verschlussdeckel einen die Durchtrittsöffnung der Stellspindel umfänglich begrenzenden Kragen auf, an dessen Innenseite ein Endbereich des Faltenbalgs ausschließlich reibschlüssig anliegt.

Um diesen Reibschluss herstellen zu können, sind jedoch bestimmte Voraussetzungen zu erfüllen. Hierzu zählen insbesondere sehr enge Toleranzen, vor allem des lichten Durchmessers des Kragens sowie dessen Oberflächenbeschaffenheit. Aber auch eine genau runde Außenkontur des Faltenbalgs im Verbindungsbereich mit dem Verschlussdeckel. Nur so ist ein halbwegs sicherer Presssitz zu erreichen.

Da der Faltenbalg insgesamt aufgrund der Relativbewegung zwischen dem Verschlussdeckel und der Stellspindel bzw. eines mit der Stellspindel fest verbundenen Druckstücks aus einem elastischen, d.h. deformierbaren Material besteht, ist im Verbindungsbereich mit dem Verschlussdeckel in den anliegenden Endbereich des Faltenbalgs eine stabile, üblicherweise metallische Einlage als Versteifungsring eingearbeitet, bevorzugt durch Umspritzen, wenn der Faltenbalg insgesamt aus Elastomer hergestellt ist.

Trotz des notwendigerweise betriebenen Aufwands hinsichtlich der genannten engen Durchmessertoleranzen, der Oberflächenbeschaffenheit der Anlageseite des Kragens sowie der genau runden Kontur des Faltenbalges, besteht die Gefahr, dass die reibschlüssige Verbindung des Faltenbalgs mit dem Verschlussdeckel durch die Relativbewegung der Stellspindel so weit gelöst wird, dass der Faltenbalg aus dem Kragen des Verschlussdeckels herauswandert, so dass eine dauerhaft angestrebte Dichtwirkung nicht gewährleistet ist.

Daneben sind aufgrund der erforderlichen engen Toleranzen entsprechend aufwändige Fertigungsmaßnahmen erforderlich, die zu relativ hohen Fertigungskosten insgesamt führen.

Eine gattungsgemäße Scheibenbremse ist aus der EP 2 199 639 A2 bekannt. Bei dieser Konstruktion ist der Versteifungsring in einer umlaufenden Nut des abgewinkelten, die Durchtrittsöffnung begrenzenden Kragens formschlüssig gehalten, wozu am Versteifungsring Federschenkel vorgesehen sind, die in die Nut eingreifen.

Der Erfindung liegt die Aufgabe zugrunde, eine Scheibenbremse der gattungsgemäßen Art so weiterzuentwickeln, dass ihre Betriebssicherheit verbessert, die Standzeit erhöht und die Fertigungskosten reduziert werden.

Diese Aufgabe wird durch eine Scheibenbremse mit den Merkmalen des Anspruchs 1 gelöst.

Durch diese konstruktive Ausbildung werden eine ganze Reihe von Vorteilen gegenüber dem Stand der Technik erzielt.

So ist zunächst der verbesserte Halt des Faltenbalgs im Verschlussdeckel zu nennen, der dazu führt, dass ein Verrutschen oder gar Lösen des Faltenbalgs aus seinem Sitz mit dem Verschlussdeckel ausgeschlossen ist.

Naturgemäß erhöht dies die Betriebssicherheit ebenso wie die Standzeit der Scheibenbremsen da der Aufnahmeraum dauerhaft, also über die gesamte Betriebszeit der Scheibenbremse, abgedichtet ist, so dass weder Schmutz noch Feuchtigkeit in den Aufnahmeraum dringen können, was die darin befindlichen Funktionsteile in Mitleidenschaft ziehen würde.

Die verbesserte Funktions- bzw. Betriebssicherheit führt letztendlich zu einer Betriebskostenoptimierung, zumindest aber zu einer Betriebskostenreduzierung.

Darüber hinaus ergeben sich durch die Erfindung verminderte Fertigungskosten, da weder für den Faltenbalg im Anbindungsbereich am Verschlussdeckel, noch an der zugeordneten Anlagefläche des Kragens, besonders enge Toleranzen eingehalten werden müssen bzw. der Faltenbalg durchaus in gewissem Maße unrund sein kann.

Zur Kostenreduzierung trägt auch bei, dass die Erfindung sehr einfach zu realisieren ist. So sind lediglich der Versteifungsring und der Kragen des Verschlussdeckels so zu modifizieren, dass ein Formschluss gebildet wird.

Da sowohl der Versteifungsring wie auch die Verschlussplatte insgesamt üblicherweise durch Umformen eines Blechteiles hergestellt werden, ist lediglich das entsprechende Umform- bzw. Bearbeitungswerkzeug anzupassen.

Im Übrigen bleibt der Verschlussdeckel unverändert, so dass im Servicefall, wenn beispielsweise Bremsbacken ausgetauscht werden müssen, auch der vorhandene gegen einen neuen Verschlussdeckel getauscht werden kann, ohne dass es dazu besondere Montagearbeiten erfordert. Dies gilt gleichermaßen für den Faltenbalg, der ebenso in neuer Ausführung ersatzweise eingesetzt werden kann.

Kostenvorteile ergeben sich im Übrigen auch daraus, dass eine Korrosionsbeschichtung des Verschlussdeckels, wie sie üblich ist, mit einem niedrigeren Reibungskoeffizienten Verwendung finden kann, die preiswerter ist als eine solche mit einem höheren Reibungskoeffizienten.

Durch den Formschluss zwischen dem Faltenbalg und dem Verschlussdeckel wird eine Beschädigung des Faltenbalges im Anlagebereich vermieden, so dass der Faltenbalg in jedem Fall seine Dichtfunktion uneingeschränkt erfüllen kann.

Nach einem weiteren Gedanken der Erfindung ist vorgesehen, den Versteifungsring mit sich axial erstreckenden Rastlaschen zu versehen, die in am Kragen des Verschlussdeckels vorgesehene Rastöffnungen eingreifen.

Dabei kann der Kragen umlaufend mit einem radial sich nach innen erstreckenden Rand versehen sein, in den die Rastöffnungen eingebracht sind.

Bevorzugt sind die Formschlussmittel in gleichem Winkelabstand zueinander angeordnet, wobei zumindest drei, vorzugsweise vier vorgesehen sind. Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer Scheibenbremse in einer geschnittenen Draufsicht

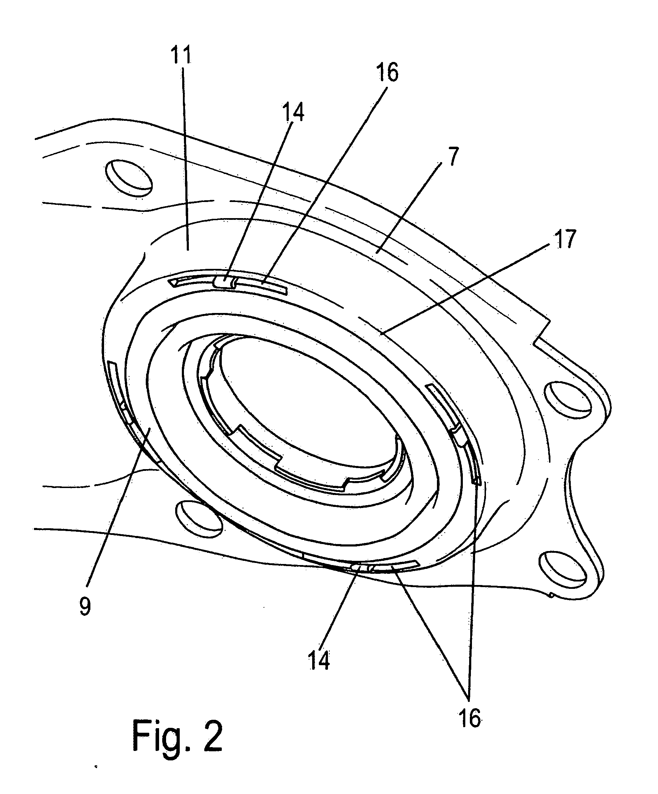

- Figur 2: einen Teilausschnitt der Verschlussplatte der Scheibenbremse in einer perspektivischen Ansicht
- Figur 3: eine Einzelheit der Scheibenbremse in einer vergrößerten geschnittenen Seitenansicht.

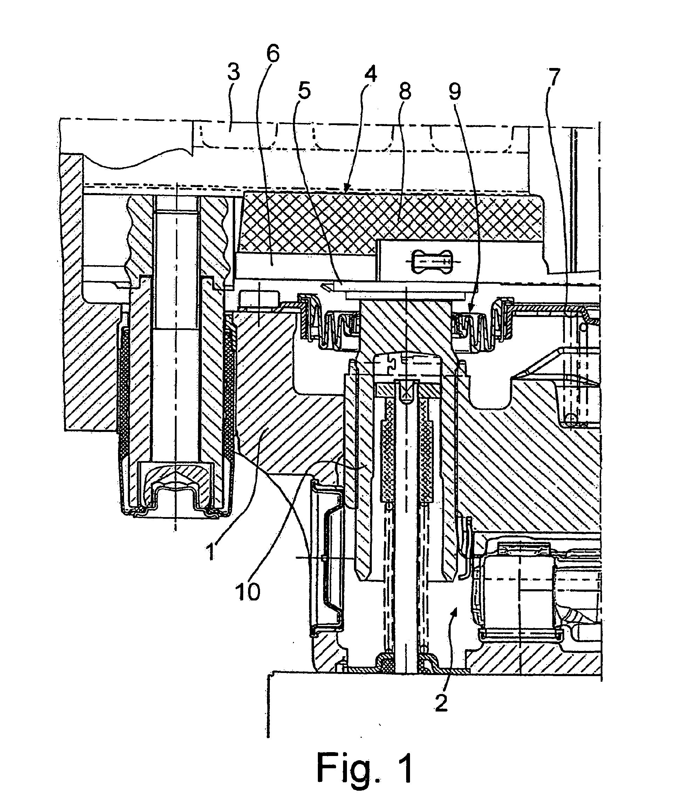

In der Figur 1 ist eine Hälfte einer Scheibenbremse dargestellt, die einen als Schiebesattel ausgebildeten Bremssattel 1 aufweist, der eine Bremsscheibe 3 in ihrem oberen Umfangsbereich umfasst. Dabei kann die Scheibenbremse pneumatisch oder elektromotorisch betätigbar sein.

Zu beiden Seiten der Bremsscheibe 3 sind Bremsbacken 4 angeordnet, von denen hier eine aktionsseitige dargestellt ist, die im Funktionsfall gegen die Bremsscheibe 3 pressbar ist.

Die Bremsbacke 4 besteht aus einer Trägerplatte 6 und einem auf deren der Bremsscheibe 3 zugewandten Seite befestigten Reibbelag 8.

Über eine in einem Aufnahmeraum des Bremssattels 1 angeordnete, über einen Drehhebel betätigbare Zuspanneinrichtung 2 wird eine Stellspindel über ein angeschlossenes Druckstück 5 gegen die Bremsbacke 4 gedrückt. Anstelle der stirnseitigen Anbindung des Druckstücks 5 an der Stellspindel 10 kann das Druckstück 5 auch fest mit der Trägerplatte 6 verbunden sein.

Zur Einstellung eines Lüftspiels zwischen dem Reibbelag 8 und der Bremsscheibe 3, unter Berücksichtigung des Verschleißes des Reibbelages 8, ist die als Gewindespindel ausgebildete Stellspindel 10 drehbar im Bremssattel gelagert und über eine nicht dargestellte Nachstelleinrichtung bewegbar.

Der Bremssattel 1 ist auf seiner der Bremsscheibe 3 zugewandten Seite weitgehend durch einen Verschlussdeckel 7 verschlossen, der im Austrittsbereich der Stellspindel 10 durchbrochen ist.

Zur Abdichtung des Austrittsbereiches ist ein mit dem Verschlussdeckel 7 verbundener Faltenbalg 9 vorgesehen, der andererseits an der Stellspindel 10 befestigt ist.

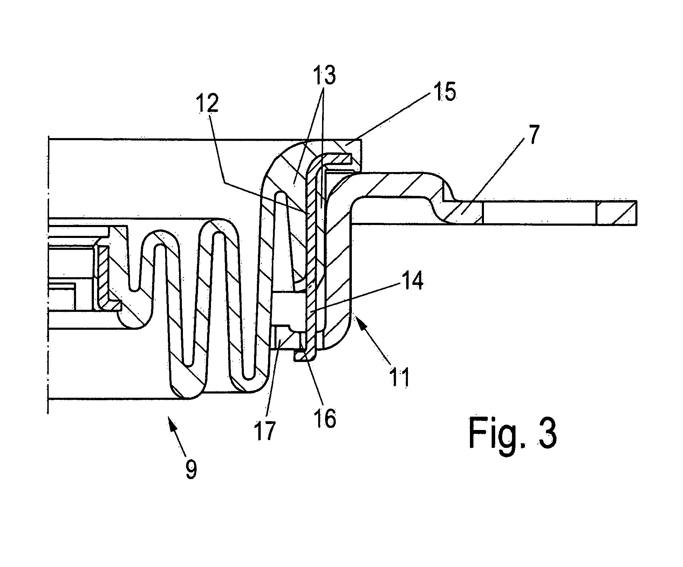

Der Austrittsbereich der Verschlussplatte für die Stellspindel 10, auf deren Darstellung in der Figur 3 verzichtet ist, wird durch einen umlaufenden, axial in Richtung des Aufnahmeraumes des Bremssattels 1 sich erstreckenden Kragen 11 begrenzt, an den sich ein nach innen abgewinkelter, radial ausgerichteter Flansch 17 anschließt.

Im Anlagebereich mit dem Kragen 11 ist ein durch Material 13 des Faltenbalges 9 umhüllter Versteifungsring 12 eingebettet, der, gemäß der Erfindung, formschlüssig mit dem Verschlussdeckel 7 verbunden ist.

Hierzu weist der Versteifungsring 12 mehrere, in gleichem Winkelabstand zueinander angeordnete Rastlaschen 14 auf, die in schlitzförmige Rastöffnungen 16 des Flansches 17 eingreifen.

Dabei sind die Rastlaschen 14 an ihren freien Enden derart abgewinkelt, dass sie nach einem Durchtreten der Rastöffnungen 16 den Flansch 17 im Sinne eines Widerhakens hintergreifen, wodurch eine axiale Sicherung des Faltenbalges 9 erreicht wird, im Zusammenspiel mit einem Rand 15 des Faltenbalges 9, der auf der dem Aufnahmeraum abgewandten, also der Außenseite des Verschlussdeckels 7 aufliegt.

Die Breite der jeweiligen Rastöffnung 16 ist so bemessen, dass die Rastlasche 14 problemlos eingeführt werden kann, unter geringer Abspreizung, bezogen auf die Mittelachse des Faltenbalges 9, so dass die Rastlasche 14 aufgrund der innewohnenden Rückstellkräfte in die in der Figur 3 dargestellte Position zurückschwenkt, in der die Rastlasche 14 ihre Endlage einnimmt.

Die Länge der Rastöffnungen 16 in Umfangsrichtung des Flansches 17 gesehen, ist größer als die zugeordnete Breite der Rastlaschen 14, wodurch eine sehr einfache Montage bzw. Befestigung des Faltenbalges 9 am Verschlussdeckel 7 gewährleistet ist.

Prinzipiell kann der Außendurchmesser des Faltenbalges 9 im Anlagebereich an der Innenfläche des Kragens 11 gegenüber dessen lichtem Durchmesser ein gewisses Übermaß aufweisen, so dass der Faltenbalg 9 in den Verschlussdeckel 7 eingepresst werden muss, wodurch sich ein Reibschluss herausbildet. Dabei sind jedoch keine besonders engen Toleranzen einzuhalten, da durch den gebildeten Formschluss ein sicherer Halt des Faltenbalges 9 im Verschlussdeckel 7 gewährleistet ist.

### Bezugszeichenliste

- 1: Bremssattel
- 2: Zuspanneinrichtung
- 3: Bremsscheibe
- 4: Bremsbacke
- 5: Druckstück
- 6: Trägerplatte
- 7: Verschlussdeckel
- 8: Reibbelag
- 9: Faltenbalg
- 10: Stellspindel
- 11: Kragen
- 12: Versteifungsring
- 13: Material
- 14: Rastlasche
- 15: Rand
- 16: Rastöffnung
- 17: Flansch

## Patentansprüche

1. Scheibenbremse, mit einem Bremssattel (1), in dem zwei in Funktion gegen eine Bremsscheibe (3) pressbare Bremsbacken (4) angeordnet sind, von denen eine aktionsseitige über mindestens eine Stellspindel (10) mittels einer Zuspanneinrichtung (2) betätigbar ist, wobei die Stellspindel (10) durch einen einen Aufnahmeraum des Bremssattels (1) zur Bremsscheibe (3) hin verschließenden Verschlussdeckel (7) geführt ist, an dem zur Abdichtung ein andererseits an der Stellspindel (10) befestigter Faltenbalg (9) angeschlossen ist, in den im Anlagebereich mit dem Verschlussdeckel (7) ein Versteifungsring (12) eingebettet ist, wobei der Versteifungsring (12) formschlüssig am Verschlussdeckel (7) befestigt ist, der im Durchtrittsbereich der Stellspindel (10) einen abgewinkelten Kragen (11) aufweist, in den Formschlussteile eingebracht sind, **dadurch gekennzeichnet, dass** der Kragen (11) einen radial nach innen sich erstreckenden Flansch (17) aufweist, in den Rastöffnungen (16) eingebracht sind, in die Rastlaschen (14) des Versteifungsrings (12) eingreifen.

2. Scheibenbremse nach Anspruch 1, **dadurch gekennzeichnet, dass** in gleichen Winkelabständen über den Umfang verteilt mehrere Rastlaschen (14) und Rastöffnungen (16) vorgesehen sind.

3. Scheibenbremse nach Anspruch 1, **dadurch gekennzeichnet, dass** sich die Rastlaschen (14), bezogen auf die Mittelachse des Faltenbalges (9) axial erstrecken.

4. Scheibenbremse nach einem der vorhergehenden Ansprüche, **dadurch gekennzeichnet, dass** jede Rastlasche (14) ein abgewinkeltes Ende aufweist, das den Flansch (17) hintergreift.

5. Scheibenbremse nach einem der vorhergehenden Ansprüche, **dadurch gekennzeichnet, dass** die Rastöffnungen (16) schlitzförmig ausgebildet sind.

6. Scheibenbremse nach einem der vorhergehenden Ansprüche, **dadurch gekennzeichnet, dass** die Länge der schlitzförmigen Rastöffnungen (16) größer ist als die zugeordnete Breite der Rastlaschen (14).

7. Scheibenbremse nach einem der vorhergehenden Ansprüche, **dadurch gekennzeichnet, dass** die Breite der Rastöffnungen (16) der in radialer Richtung gesehenen Breite des abgewinkelten Endes der Rastlaschen (14) entspricht oder geringfügig größer ist.

## Claims

1. Disc brake, with a brake calliper (1) in which two brake shoes (4) that can be functionally pressed against a brake disc (3) are arranged, one of which can be actuated on the active side by at least one control spindle (10) by means of a brake applicator device (2), wherein the control spindle (10) extends through a closing cover (7) of an accommodation space holding the brake calliper (1) toward the brake disc (3), on which, to form a seal, a bellows (9) is attached on the other side onto the control spindle (10), in which, in the contact area with the closing cover (7), a stiffening ring (12) is embedded, such that the said stiffening ring (12) is fixed with positive interlock onto the closing cover (7), which in the area through which the control spindle (10) passes has an angled collar (11) in which interlocking elements are provided, **characterised in that** the collar (11) has a flange (17) that extends radially inwards, in which are formed retaining openings (16) in which retaining tabs (14) of the stiffening ring (12) engage.

2. Disc brake according to Claim 1, **characterised in that** a number of retaining tabs (14) and retaining openings (16) are distributed around the circumference at equal angular distances.

3. Disc brake according to Claim 1, **characterised in that** the retaining tabs (14) extend axially relative to the central axis of the bellows (9).

4. Disc brake according to any of the preceding claims, **characterised in that** each retaining tab (14) has an angled end which engages behind the flange (17).

5. Disc brake according to any of the preceding claims, **characterised in that** the retaining openings (16) are in the shape of slots.

6. Disc brake according to any of the preceding claims, **characterised in that** the length of the slot-shaped retaining openings (16) is larger than the width of the associated retaining tabs (14).

7. Disc brake according to any of the preceding claims, **characterised in that** the width of the retaining openings (16) corresponds to or is slightly larger than the width of the angled end of the retaining tabs (14) as viewed in the radial direction.

## Revendications

1. Frein à disque, comprenant un étrier (1), dans lequel deux mâchoires de frein (4) sont disposées, qui sont aptes à être pressé contre un disque de frein (3) en opération, dont l'une du côté d'action est commandable via au moins un vis de réglage (10) moyennant un dispositif de serrage du frein (2), dans lequel ledit vis de réglage (10) est passé à traves un couvercle de fermeture (7), qui ferme un espace de réception dudit étrier de frein (1) vers ledit disque de frein (3), auquel est raccordé un soufflet (9) fixé, d'autre côté, audit vis de réglage (10) afin d'assurer l'étanchéité, dans lequel soufflet un anneau de renforcement (12) est noyé dans la zone de contact audit couvercle de fermeture (7), audit anneau de renforcement (12) étant fixé, de manière positive, audit couvercle de fermeture (7), qui présente un collet faisant un angle dans la zone de passage dudit vis de réglage (10), **caractérisée en ce que** ledit collet (11) présente une bride (17), qui s'étend radialement vers l'intérieur, dans laquelle des ouvertures d'encliquetage (16) sont formées, où se trouve en prise les languettes d'encliquetage (14) dudit anneau de renforcement (12).

2. Frein à disque selon la revendication 1, **caractérisée en ce qu'**une pluralité des languettes d'encliquetage (14) et des ouvertures d'encliquetage (16) est distribuée aux écarts angulaires égaux autour de la périphérie.

3. Frein à disque selon la revendication 1, **caractérisée en ce que** lesdites languettes d'encliquetage (14) s'étendent en sens axial relativement à l'axe central dudit soufflet (9).

4. Frein à disque selon une quelconque des revendications précédentes, **caractérisée en ce que** chaque languette d'encliquetage (14) présente une extrémité faisant un angle, qui se trouve en prise derrière ladite bride (17).

5. Frein à disque selon une quelconque des revendications précédentes, **caractérisée en ce que** lesdites ouvertures d'encliquetage (16) one une configuration en fente.

6. Frein à disque selon une quelconque des revendications précédentes, **caractérisée en ce que** la longueur desdites ouvertures d'encliquetage en fente (16) est plus grande que la largeur affectée desdites languettes d'encliquetage (14).

7. Frein à disque selon une quelconque des revendications précédentes, **caractérisée en ce que**, vue en sens radial, la largeur desdites ouvertures d'encliquetage (16) correspond à la largeur de ladite extrémité faisant un angle desdites languettes d'encliquetage (14), ou est un peu plus grande que la dernière.
